# FASCICULE DE BREVET EUROPEEN

(11) **EP 0 499 757 B1**
(45) Date de publication et mention de la délivrance du brevet: **20.07.1994**
(21) Numéro de dépôt: 91403076.2
(22) Date de dépôt: 15.11.1991
(51) Int. Cl.: F16B 7/00, F16B 21/07, B60N 2/00

(54) **Dispositif d'assemblage à emboîtement et verrouillage et son application notamment aux armatures pour sièges d'automobile**
Schnappverbindungsvorrichtung und ihre Anwendung, insbesondere für Rahmen von Fahrzeugsitzen
Snap-action connecting device and its application in particular to vehicle-seat-frames

(30) Priorité: 24.12.1990 FR 9016240
(43) Date de publication de la demande: 26.08.1992
(73) Titulaire: CESA COMPAGNIE EUROPEENNE DE SIEGES POUR AUTOMOBILES, 92300 Levallois-Perret (FR)
(72) Inventeur: Fourrey, François, F-25200 Montbeliard (FR); Verhoog, Roel, F-25700 Valentigney (FR); Roulleau, Jean Michel, F-25400 Audincourt (FR)
(74) Mandataire: Mestre, Jean (FR)

(56) Documents cités:
- EP-A- 0 359 406
- EP-A- 0 368 761
- DE-A- 2 814 995
- DE-U- 8 223 754
- US-A- 2 380 632

## Description

La présente invention concerne un dispositif d'assemblage à emboîtement et verrouillage pour réunir deux pièces et son application notamment aux armatures pour sièges d'automobile.

Dans de nombreux secteurs techniques, il est nécessaire de réunir deux pièces, l'une femelle et l'autre mâle, et pour ce faire on a déjà proposé des dispositifs d'assemblage à emboîtement et verrouillage.

Un secteur technique où il est nécessaire de réunir deux pièces l'une femelle et l'autre mâle est, par exemple, celui de la fabrication des sièges d'automobile.

Les sièges d'automobile sont généralement munis d'armatures qui comprennent, habituellement, un cadre de dossier et un cadre d'assise associés l'un à l'autre à l'aide d'au moins une articulation latérale faite d'un axe qui joint deux flasques dont l'un est solidaire du cadre de l'assise et l'autre du cadre du dossier.

Ces armatures sont habituellement revêtues de coussins. Ces coussins, que ce soit celui de l'assise ou celui du dossier sont le plus souvent constitués d'un revêtement extérieur du type housse, par exemple textile, à l'intérieur duquel se trouve une matelassure généralement en mousse. Cette mousse assure le remplissage du revêtement et procure le confort de l'occupant assis sur le siège et qui repose sur les coussins.

Une technique classique pour la confection d'un tel coussin consiste à utiliser un moule dans lequel est placé le revêtement extérieur et dans lequel on injecte une composition moussante qui génèrera la mousse qui formera un tout indissociable avec le revêtement textile extérieur. Cette technique est habituellement dénommée technique de garnissage in-situ.

Les coussins ainsi fabriqués sont ensuite fixés à l'armature du siège.

Il a déjà aussi été proposé d'associer cette technique de garnissage in-situ à celle dite de garnissage par surmoulage. Selon cette technique dite de surmoulage, l'armature du siège proprement dite et/ou une nappe élastique de fils, le plus souvent métalliques, sont placées dans le moule en question où l'on procède ensuite à la technique de garnissage in-situ pour fabriquer les coussins.

On comprend que lorsqu'on confectionne des sièges en associant la technique de garnissage in-situ à celle de surmoulage de l'armature et éventuellement de sa nappe élastique, il est nécessaire de disposer d'un armature de sièges dont les cadres du dossier et de l'assise sont dissociés.

Ensuite, il faut joindre le cadre du dossier et le cadre de l'assise qui sont habituellement réunis par au moins une articulation faite d'un axe qui joint deux flasques dont l'un est solidarisé au cadre du dossier et l'autre à celui de l'assise.

Des dispositifs de jonction d'éléments ont été proposés. Un état de la technique est illustré par le document US-A-2 380 682 qui concerne un support pour projecteur cinématographique avec des pieds en deux tronçons tubulaires. Le dispositif de jonction des tronçons de pied proposé comprend un manchon ovoïde tronqué creux qui est vissé sur l'une des extrémités d'un tronçon et qui est pourvu d'une saignée extérieure longitudinale dans laquelle est monté basculant un levier à deux bras dont l'un d'eux est muni d'un bec servant de pêne destiné à s'engager dans un orifice servant de gâche ménagé au voisinage d'une extrémité d'un autre tronçon.

L'invention a pour but de confectionner un dispositif d'assemblage qui permet de réunir deux pièces par emboîtement et verrouillage.

L'invention a pour objet un dispositif d'assemblage à emboîtement et verrouillage dont les particularités distinctives sont exposés notamment dans la revendication 1.

L'invention a aussi pour objet l'application d'un tel dispositif à une armature pour siège d'automobile faite d'un cadre de dossier et d'un cadre d'assise qui sont réunis par une articulation comprenant deux flasques joints par un axe où la pièce femelle est solidaire du cadre de dossier et la pièce mâle est l'un de ces flasques dont l'autre est solidaire du cadre d'assise.

D'autres caractéristiques de l'invention ressortiront de la lecture de la description et des revendications qui suivent ainsi que de l'examen du dessin annexé, donné seulement à titre d'exemple où :

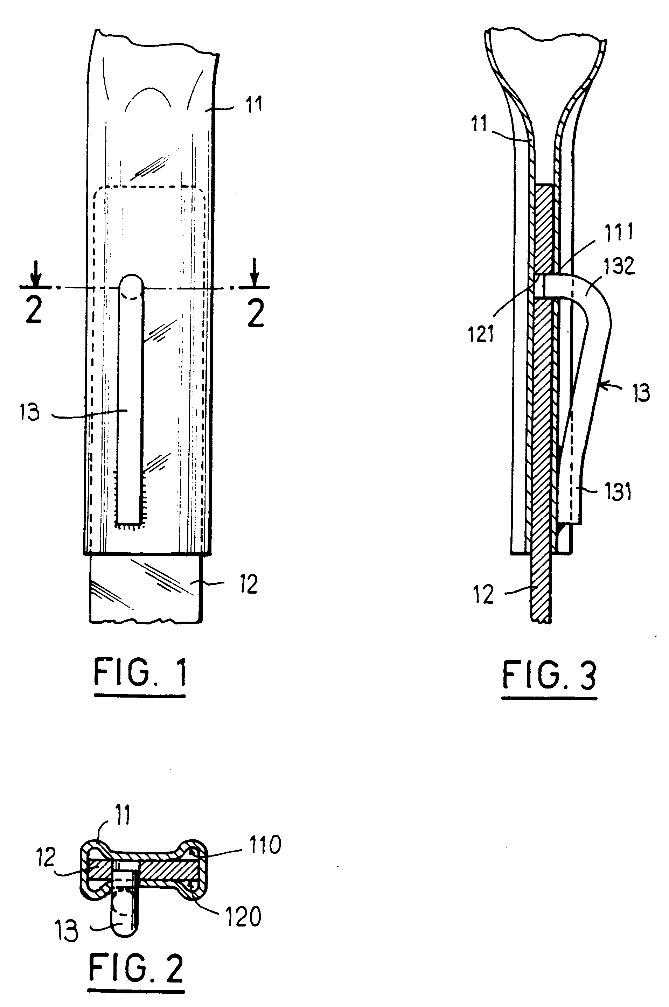

- la Figure 1 est une vue en élévation d'un mode de réalisation d'un dispositif selon l'invention;
- la Figure 2 est une coupe selon la ligne 2-2 de la Figure 1; et
- la Figure 3 est une vue de côté partiellement en coupe du dispositif des Figures 1 et 2.

Dans ce qui suit, le mode de réalisation décrit et représenté de l'invention sera exposé à propos de son application aux sièges d'automobile. Les techniques de fabrication de sièges automobile étant bien connues dans la technique, on ne décrira que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, un même numéro de référence est utilisé pour identifier toujours un élément homologue, quel que soit le mode de réalisation.

Pour la commodité de l'exposé, on décrira chacun des constituants d'un mode de réalisation d'un dispositif selon l'invention avant d'en exposer l'assemblage.

Comme indiqué auparavant, le dispositif selon l'invention sera exposé à propos de son application particulière aux sièges d'automobile. Il est clair que cette application est seulement donnée à titre d'exemple.

Comme on le voit en examinant les figures du dessin, le dispositif d'assemblage à emboîtement et verrouillage 10 est destiné à réunir deux pièces l'une femelle 11 et l'autre mâle 12.

La pièce femelle 11 se présente à la manière d'un embout de tube déformé de manière à présenter une section intérieure 110 approximativement en configuration d'os, de papillon ou de signe mathématique "infini". Comme on le voit, un pont médian joint deux protubérances extrémales; ce pont médian présente un trou 111 qui débouche à l'intérieur.

La pièce mâle 12 se présente à la manière d'une queue à section extérieure 120 approximativement rectangulaire. Cette queue est destinée à être engagée dans cet embout de préférence sans jeu. Comme on peut l'observer, un orifice 121 transperce cette queue et est destiné à être mis en correspondance avec le trou 111.

Ce dispositif comprend aussi une agrafe 13 élastique en forme de L avec une branche 131 longue et une branche 132 courte. Comme on peut l'observer, cette agrafe est fixée sur le pont médian de la pièce femelle 11 par sa branche longue 131 de manière que sa branche courte 132 soit normalement engagée dans le trou 111 et fasse saillie à l'intérieur. Cette branche courte 132 est d'une longueur suffisante pour qu'elle puisse pénétrer dans l'orifice 121 quand les pièces femelle 11 et mâle 12 sont emboîtées l'une dans l'autre et quand les trou 111 et orifice 121 sont en regard.

Comme on peut l'observer, l'agrafe 13 est réunie au pont médian de la pièce femelle 11 par son extrémité libre.

Pour réunir les pièces femelle et mâle, il suffit de les engager l'une dans l'autre correctement orientées au besoin, afin qu'en les enfonçant trou et orifice viennent en registre. De préférence, l'extrémité libre de la pièce mâle est bisautée afin que l'introduction de la pièce mâle dans la pièce femelle provoque automatiquement l'escamotage de l'agrafe; si tel n'est pas le cas, la branche courte de l'agrafe est momentanément dégagée de l'intérieur de la pièce femelle pour laisser libre passage à la pièce mâle.

De préférence, les pièces femelle et mâle et l'agrafe sont métalliques et l'agrafe est alors réunie à la pièce femelle par soudage.

L'agrafe est par exemple faite en corde à piano.

La conformation grosso modo en os de l'embout de la pièce femelle est obtenue par toutes techniques classiques de travail appropriées aux tubes métalliques par exemple roulage, estampage, etc.

Les trou et orifice sont obtenus par exemple par poinçonnage.

De préférence, le trou 111 dans le pont médian n'est ménagé que sur une seule face de celui-ci, de préférence sur celle qui sera située à l'intérieur du siège.

Pour l'application particulière du dispositif selon l'invention qui a été indiquée précédemment, la pièce femelle est par exemple constituée par chacune des extrémités libres d'un cadre de dossier fait d'un tube cintré en U et la pièce mâle est constituée par chacun des flasques fait d'une tôle plane de l'articulation dont les autres des flasques sont solidaires du cadre d'assise.

De ce qui précède, on comprend tout l'intérêt et tous les avantages du dispositif selon l'invention, en particulier pour son application aux armatures de sièges automobiles puisqu'il permet de réunir rapidement et efficacement par simple emboîtement et verrouillage deux pièces l'une femelle et l'autre mâle, de cadres d'armature préalablement garnis, habillés de leur coussin.

## Revendications

1. Dispositif d'assemblage à emboîtement et verrouillage comprenant deux pièces l'une femelle et l'autre mâle et destiné à les réunir. caractérisé en ce que la pièce femelle (11) se présente à la manière d'un embout creux de tube déformé pour lui donner une section intérieure (110) approximativement en configuration d'os avec un pont médian joignant deux protubérances extrêmales, un trou (111) débouchant dans ce pont médian, en ce que la pièce mâle (12) se présente à la manière d'une queue à section extérieure (120) approximativement rectangulaire destinée à être engagée dans cet embout, un orifice (121) transperçant cette queue et étant destiné à être mis en correspondance avec ce trou (111), et en ce qu'une agrafe (13) élastique en forme de L avec une branche longue (131) et une branche courte (132) est fixée sur le pont médian de la pièce femelle (11) par sa branche longue (131) de manière que sa branche courte (132) puisse normalement s'engager dans le trou (111) et puisse aussi pénétrer dans l'orifice (121) quand les pièces mâle et femelle sont emboîtées et les trou et orifice sont en regard, afin de verrouiller l'une sur l'autre ces deux pièces emboîtées.

2. Dispositif selon la revendication 1, caractérisé en ce que l'agrafe (13) est soudée au pont médian de la pièce femelle (11) par son extrémité libre.

3. Dispositif selon les revendications 1 et 2, caractérisé en ce que la pièce femelle (11) et l'agrafe (13) sont métalliques.

4. Dispositif selon la revendication 3, caractérisé en ce que l'agrafe est en corde à piano.

5. Application du dispositif conforme à l'une quelconque des revendictions 1 à 4 à une armature pour siège d'automobile faite d'un cadre de dossier et d'un cadre d'assise qui sont associés par une articulation comprenant deux flasques joints par un axe , caractérisée en ce que la pièce femelle est solidaire du cadre de dossier et la pièce mâle est l'un de ces flasques dont l'autre est solidaire du cadre d'assise.

## Patentansprüche

1. 1 - Schnappverbindungsvorrichtung bestehend aus zwei Teilen, und zwar einem Aufnahme- und einem Einsteckteil, bestimmt zu ihrem Zusammenfügen, **dadurch gekennzeichnet**, daß sich das Aufnahmeteil (11) in der Art eines hohlen Endes eines Rohres darstellt, das in der Weise verformt wurde, daß es einen inneren Abschnitt 110 in der ungefähren Form eines Knochens aufweist mit einer mittleren Brücke zum Zusammenfügen von zwei an den Enden befindlichen Buckeln, ein in diese mittlere Brücke mündendes Loch (111), und dadurch, daß sich das Einsteckteil (12) als ein Stiel mit einem ungefähr rechteckförmigen äußerem Abschnitt (120) darstellt, der zum Einführen in das Endstück vorgesehen ist, eine durch diesen Stiel führende und zur Verbindung mit dem Loch (111) bestimmte Öffnung (121) und dadurch, daß eine L-förmige elastische Klammer (13) mit einem langen Arm (131) und einem kurzen Arm (132) an der mittleren Brücke des Aufnahmeteils (11) mit ihrem langen Arm (131) befestigt ist und zwar dergestalt, daß ihr kurzer Arm (132) regelrecht in das Loch (111) eingeführt werden kann und auch in die Öffnung (121) eindringen kann, wenn Aufnahme- und Einsteckteil ineinandergefügt sind und Loch und Öffnung sich gegenüberliegen, um die beiden zusammengesteckten Teile miteinander zu verriegeln.

2. Vorrichtung nach Anspruch 1, **dadurch gekennzeichnet**, daß die Klammer (13) mit ihrem freien Ende an der mittleren Brücke des Aufnahmeteils (11) angeschweißt ist.

3. Vorrichtung nach Anspruch 1 und 2, **dadurch gekennzeichnet**, daß das Aufnahmeteil (11) und die Klammer aus Metall bestehen.

4. Vorrichtung nach Anspruch 3, **dadurch gekennzeichnet**, daß die Klammer aus einer Klaviersaite besteht.

5. Anwendung der Vorrichtung entsprechend einem beliebigen der Ansprüche 1 bis 4 bei einem Rahmen eines Fahrzeugsitzes, der aus einem Rahmenteil für die Rückenlehne und einem Rahmenteil für den Sitz besteht, die durch ein Gelenk miteinander verbunden sind, das zwei durch eine Achse verbundene Flansche umfaßt, **dadurch gekennzeichnet**, daß das Aufnahmeteil am Rahmenteil der Rückenlehne befestigt ist und das Einsteckteil einen der beiden Flansche darstellt, von denen der andere am Rahmenteil der Sitzfläche befestigt ist.

## Claims

1. Snap-action connecting device comprising two parts, one female and the other male, and designed to join them together, characterised in that the female part (11) is in the form of a hollow end piece of a tube deformed so as to give it an internal cross section (110) approximately in the shape of a bone with a middle bridge joining two end protuberances, a hole (111) opening out in this middle bridge, in that the male part (12) is shaped like a shank with an approximately rectangular external cross section (120) designed to be engaged in this end piece, an orifice (121) passing through this shank and being designed to made to coincide with this hole (111), and in that an L-shaped elastic hook (13) with a long arm (131) and a short arm (132) is fixed to the middle bridge of the female part (11) by its long arm (131) so that its short arm (132) can normally engage in the hole (111) and can also enter the orifice (121) when the male and female parts are fitted together and the hole and orifice are opposite each other, so as to lock these two fitted parts together.

2. Device according to claim 1, characterised in that the hook (13) is welded to the middle bridge of the female part (11) by its free end.

3. Device according to Claims 1 and 2, characterised in that the female part (11) and hook (13) are metal.

4. Device according to Claim 3, characterised in that the hook is made from piano wire.

5. Application of the device according to any one of Claims 1 to 4 to a frame for a vehicle seat made from a backrest framework and a squab framework which are connected by means of an articulation comprising two plates joined by a shaft, characterised in that the female part is secured to the backrest framework and the male part is one of these plates, the other one of which is secured to the squab framework.
